(19)

Europäisches
Patentamt
European
Patent Office
Office européen
des brevets

(11) **EP 4 679 256 A1**

(12) **EUROPEAN PATENT APPLICATION**

(43) Date of publication:
**14.01.2026  Bulletin 2026/03**

(21) Application number: **24382732.6**

(22) Date of filing: **09.07.2024**

(51) International Patent Classification (IPC):
*G06F 7/499* (2006.01)    *G06F 7/544* (2006.01)

(52) Cooperative Patent Classification (CPC):
**G06F 7/5443; G06F 7/49973**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vodafone Group Services Limited Newbury, Berkshire RG14 2FN (GB)**

(72) Inventor: **CAFFARENA FERNÁNDEZ, Gabriel London, W2 6BY (GB)**

(74) Representative: **Boult Wade Tennant LLP Salisbury Square House 8 Salisbury Square London EC4Y 8AP (GB)**

(54) **OPTIMIZATION FOR DIGITAL PROCESSING SYSTEMS**

(57)    There are provided systems and methods for reducing quantization errors, including method of optimizing a routine for a hardware-based processing system having a fixed length two's complement binary representation, the method comprising: receiving an instruction sequence arranged to perform the routine, wherein the instruction sequence comprises a set of arithmetic operations, wherein the outputs of the arithmetic operations exceed a precision of the hardware-based processing system;
identifying one or more pairs of sub-sets of instructions in the sequence of instructions, the sub-sets of each pair having a respective comparable truncation error; generating an optimized routine by modifying one of the subsets of each pair to invert the sign of one or more inputs to said sub-sets, and modifying the instruction sequence to compensate for the said inversion.

Figure 5

**Description**

**Field of the invention**

The present invention relates to optimization of computer implemented calculations for digital processing systems having fixed bit precision.

**Background of the invention**

It is commonly understood that modern digital processing systems almost universally process numbers using binary representations having a fixed number of binary digits. The fixed number of binary digits is usually a multiple of the underlying word size of the digital processing system, and so represents an architectural constraint of the binary processing system itself. Common examples of such fixed length binary number types include "short integers" which are 16 bits long and "long integers" which are typically 32 bits long. Decimal numbers are typically represented using either fixed-point or floating-point binary representation, again with a fixed number of binary digits. Examples include single-precision floating-point format numbers which are 32 bits long, and double-precision floating-point format numbers which are 64 bits long.

As such, in order to process decimal fractions of arbitrary precision quantization must be used to represent such decimal fractions as fixed length binary numbers. Quantization is the process of reducing the precision of data, similar to reducing the number of fractional digits (often called least significant digits) in a decimal number (i.e. 2.431 can be quantized to 2.43 or to 2.4, etc.). and it happens often along the computation chain of an algorithm, since many operation results exceed the number of bits allowed, being necessary to quantize their values to fit the machine data size. Quantization can be performed by simply removing the least significant bits (truncation) or by rounding the number before removing these bits (rounding). Both of these methods have disadvantages. Truncation whilst inexpensive in terms of hardware and processing penalties produces errors that are additive. This can result in large errors in the overall output of a complex calculation as individual truncation errors accumulate across the plurality of arithmetic operations that make up the calculation.

Rounding schemes can be chosen that result in a mean average error of zero, or close to zero. Round-to-nearest schemes are common examples of rounding schemes with a mean error of zero, or close to zero. This tends to minimize the error due to quantization in the overall output of a complex calculation as individual rounding errors tend to cancel out across the plurality of arithmetic operations that make up the calculation. However, such rounding schemes require additional arithmetic operations to be carried out. This incurs a computational penalty, and in calculations that are implemented in hardware, and additional hardware costs as additional hardware elements (such as further adders) are required.

**Summary of the invention**

The present disclosure aims to address the above discussed quantization problems. To that end a new truncation operation is described with an average error of inverse sign (or polarity) compared to that obtained by existing truncation techniques. Optimization schemes are presented that combine this new double sign inversion truncation operation and existing truncation operations to cause a cancellation of truncation errors in arbitrary calculations. In such a manner software or hardware routines implementing arbitrary calculation may be optimized for digital processing machines having specific fixed bit length requirements.

The methods and systems described herein thereby enable improvement in the performance of embedded code and reductions in the energy footprint of calculation specific integrated circuits. They also enable improvement in computational efficiency of software routines.

In a first aspect there is provided a method of optimizing a routine (or calculation or algorithm) for a hardware-based processing system. The routine may be a software routine, or may be hardware description language routine. The hardware-based processing system having a two's complement binary representation. Operations carried out on the hardware-based processing system are typically subject to a respective fixed binary length for operand values (or variables). The fixed-length may vary on an operation by operation basis. The fixed-length may vary on a variable type by variable type basis. Alternatively, the fixed length may be fixed for all operations (or all variables of a specific type). For example, the hardware-based processing system may have (or specify) a fixed length two's complement binary representation.

The method comprises receiving an instruction sequence arranged to perform the routine, wherein the instruction sequence comprises a set of arithmetic operations, wherein the outputs of the arithmetic operations exceed a precision of the hardware-based processing system; identifying one or more pairs of sub-sets of instructions in the sequence of instructions, the sub-sets of each pair having a respective comparable truncation error; generating an optimized routine by modifying one of the sub-sets of each pair to invert the sign of one or more inputs to said sub-sets, and modifying the instruction sequence to compensate for the said inversion. Said modification may be thought of as causing a cancellation of truncation errors between each pair of sub-sequences.

The step of modifying the instruction sequence may comprise modifying the instruction sequence to invert sign of the output of each sub-sequence with an inverted sign input.

The instruction sequence may comprise at least one instruction to sum the outputs of a respective pair of sub-sets and said modification of the instruction sequence comprises replacing each instruction to sum the outputs with an instruction to calculate the difference of the outputs of the respective pair of sub-sets.

In some embodiments modifying one of the sub-set of at least one pair to invert the sign of the input to said sub-sequence comprises inverting the sign of a multiplicative constant used in the sub-set.

In some embodiments said generating comprises removing rounding operations (such as round-to-nearest operations, or half up rounding operations or round to even operations etc) from at least one pair of sub-set.

The routine may comprise an N-dimensional scalar product of two vectors and the sequence of instructions comprises summing N vector coefficient multiplications (such as a software routine implementing matrix multiplication). Furthermore, each of the sub-sequences may comprise a respective vector coefficient multiplication, wherein the modified instruction sequence takes the difference of the sum of the sub-set with the inverted sign input and the sub of the other sub-set.

The routine may implement a linear time invariant (LTI) algorithm. Furthermore, identifying one or more pairs of sub-sets may comprise calculating a respective average error in the output of the routine due to the truncation of each arithmetic operation in the set of arithmetic operations. Here, identifying one or more pairs of sub-sets may comprise (or be effected by) minimizing the sum of the respective average errors.

The routine may implement a filter bank (such as an analysis-synthesis filter bank) comprising two or more channels, wherein each sub-set of instructions corresponds to a respective channel.

In a second aspect there is provided a method of calculating an N-dimensional scalar product of two vectors in a hardware-based processing system having a fixed length two's complement binary representation. The method comprises calculating the sum of N/2 vector coefficient vector multiplications of the scalar product, wherein said calculating comprises truncating intermediate results which exceed a precision of the hardware-based processing system; calculating the sum of the other N/2 vector coefficient vector multiplications of the scalar product, wherein said calculating comprises inverting the sign of each vector coefficient of one of the two vectors and truncating intermediate results which exceed a precision of the hardware-based processing system; calculating the difference of the sum of N/2 vector coefficient vector multiplications of the scalar product and the sum of the other N/2 vector coefficient vector multiplications of the scalar product to thereby obtain the scalar product.

In a third aspect there is provided a method of implementing filter bank having a plurality of channels, in a hardware-based processing system having a fixed length two's complement binary representation. The method comprises receiving an input signal; applying the filters of a first sub-set of M channels the plurality of channels to the input signal; applying the filters of a second sub-set of M channels the plurality of channels to an inverted sign input signal; generating an output of the filter bank by taking the difference of the outputs of the first sub-set of M channels and the second sub-set of M channels.

According to a fourth aspect of the invention, there is provided a system adapted to carry out above-mentioned first, second or third aspect or any embodiment thereof.

To that end there is provided a system for optimizing a routine (or calculation or algorithm) for a hardware-based processing system, the system comprising a memory and one or more processors configured to carry out the steps of receiving an instruction sequence arranged to perform the routine, wherein the instruction sequence comprises a set of arithmetic operations, wherein the outputs of the arithmetic operations exceed a precision of the hardware-based processing system; identifying one or more pairs of sub-sets of instructions in the sequence of instructions, the sub-sets of each pair having a respective comparable truncation error; generating an optimized routine by modifying one of the sub-sets of each pair to invert the sign of one or more inputs to said sub-sets, and modifying the instruction sequence to compensate for the said inversion. Said modification may be thought of as causing a cancellation of truncation errors between each pair of sub-sequences.

According to a fifth aspect of the invention, there is provided an application specific integrated circuit arranged to carry out the method according to either the second aspect or the third aspect or any embodiment thereof.

According to a sixth aspect of the invention, there is provided a computer program which, when executed by one or more processors, causes the one or more processors to carry out the above-mentioned first, second or third aspect or any embodiment thereof or any embodiment thereof. The computer program may be stored on a computer readable medium.

## Brief description of the drawings

Embodiments of the invention will now be described, by way of example only, with reference to the accompanying drawings, in which:

Figure 1a logically illustrates three different quantization operations 110; 120; 130;
Figure 1b logically illustrates the application of double sign inversion truncation operation to an example arithmetic operation;
Figure 1c logically illustrates the application of a double sign inversion truncation operation to an example sequence of arithmetic operations;
Figure 2 logically illustrates the application of a double sign inversion truncation operation to a further example sequence of arithmetic operations;
Figure 3 schematically illustrates an example of a calculation (or routine) comprising a plurality of arithmetic operations;
Figure 4 schematically illustrates an example of a computer system;
Figure 5 schematically illustrates a method 400 optimizing a routine for a hardware-based processing system having a fixed length two's complement binary representation;
Figure 6a schematically illustrates such a 4th-order FIR filter;
Figure 6b schematically illustrates the FIR filter of figure 6a with truncation operations;
Figure 6c schematically illustrates an optimized version of the FIR filter of figure 6a;
Figure 7a schematically illustrates an analysis-synthesis filter bank;
Figure 7b schematically illustrates an analysis-synthesis filter bank optimized with double sign inversion truncation operations.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

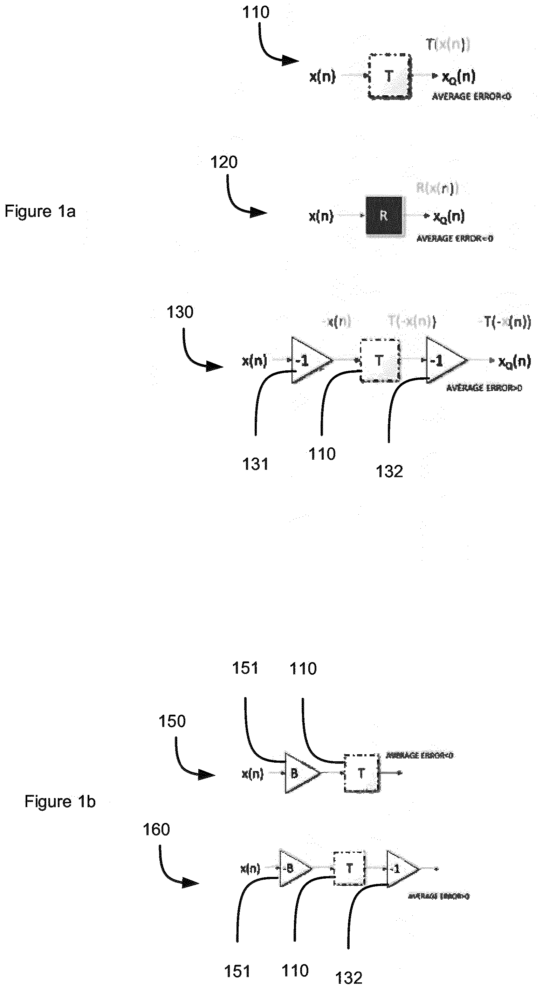

Figure 1a logically illustrates three different quantization operations 110; 120; 130. Each quantization operation 110; 120; 130 takes an input variable (or signal or number), represented as $x(n)$, and provides as output a quantized version of the variable (or signal or number) according to a pre-defined fixed binary precision. The quantized output variable is represented as $x_Q(n)$.

The operation 110 is a truncation operation. The truncation operation is represented in the figure by the symbol $T$, or as the mathematical function $T()$. The truncation operation takes as input an input variable $x(n)$ in a two's complement binary representation and drops (or truncates) the least significant binary digits to produce a quantized binary output variable $x_Q(n)$ of the pre-defined fixed binary precision. For example, if the input variable $x(n)$ is 6 bits long and assigned the decimal value $13_{10}$ then the input variable $x(n)$ will have the two's-complement binary representation of $001101_2$. In the preceding numbers and herein after the subscript 10 indicates a decimal representation and the subscript 2 indicates a two's-complement binary representation. In this example the fixed binary width is 4 bits. The truncation operation drops (or removes) the two least significant bits to produce a quantized output variable 4 bits wide. In particular, the value of the quantized binary output variable $x_Q(n)$ is $0011\underline{00}_2$ which in decimal representation is $12_{10}$. As such the truncation introduces an error of $-1_{10}$. Here the dropped binary digits are retained as zero values and underlined for ease of understanding but it will be appreciated that these digits are not stored (hence are assumed zero) in the 4-bit wide output.

Similarly, in another example the input variable $x(n)$ may be assigned the decimal value $-13_{10}$ then the input variable $x(n)$ will have the two's-complement binary representation of $110011_2$. In this example the truncation operation outputs the quantized binary output variable $x_Q(n)$ having a value of $110\underline{000}_2$ which in decimal representation is $-16_{10}$. As such the truncation introduces an error of $-3_{10}$. It will be appreciated that when truncating two's-complement binary representations the error introduced will always be less than or equal to 0. As such, when multiple such functions are carried out in a sequence of arithmetical operations the average error is likely to be non-zero. Thus, the truncation errors in a sequence of arithmetic operations are likely to have a large contribution to the overall mean squared error (MSE) on the overall sequence of arithmetic operations.

Furthermore, it will be understood that when implementing such a truncation in hardware (either by a general-purpose processor, or as an operation on an application specific chip, of field-programmable gate array or the like) there is no additional hardware requirement. Instead, the dropped (or truncated) digits are simply not stored in the corresponding register in the processor, or simply not passed to the subsequent hardware block.

The operation 120 is a rounding (or round-to-nearest) operation. The rounding operation is represented in the figure by the symbol $R$, or as the mathematical function $R()$. The rounding operation takes as input an input variable $x(n)$ in a two's complement binary representation and rounds the input variable to the nearest quantized binary number representable in the pre-defined fixed binary precision. The nearest quantized binary number representable in the pre-defined fixed binary precision is assigned to the quantized binary output variable $x_Q(n)$. For example, if the input variable $x(n)$ is 6 bits long and assigned the decimal value $13_{10}$ then the input variable $x(n)$ will have the two's-complement binary representation of $001101_2$. In this example the fixed binary width is 4 bits. The rounding operation produces a quantized output variable 4 bits wide. In particular, the value of the quantized binary output variable $x_Q(n)$ is $0011\underline{00}_2$ which in decimal representation is $12_{10}$. As such the rounding introduces an error of $-1_{10}$. Here the dropped binary digits are retained as zero values and underlined for ease of understanding but it will be appreciated that these digits are not stored (hence are assumed zero) in the 4-bit wide output. It will be understood that a number of different such rounding schemes exist to handle the situation where the number to be rounded is equidistant between two quantized binary numbers, such as half-up rounding, round-to-even and so on.

Similarly, in another example the input variable $x(n)$ may be assigned the decimal value $-13_{10}$ then the input variable $x(n)$ will have the two's-complement binary representation of $110011_2$. In this example the rounding operation outputs the quantized binary output variable $x_Q(n)$ having a value of $1101\underline{00}_2$ which in decimal representation is $-12_{10}$. As such the rounding introduces an error of $+1_{10}$. It will be appreciated that when rounding two's-complement binary representations the error introduced may be positive or negative or zero. As such, when multiple such functions are carried out in a sequence of arithmetical operations the average error tends to zero. Thus, the rounding errors in a sequence of arithmetic operations are likely to have a small (or zero) contribution to the overall mean squared error (MSE) on the overall sequence of arithmetic operations.

Furthermore, it will be understood that when implementing such a rounding in hardware (either by a general-purpose processor, or as an operation on an application specific chip, of field-programmable gate array or the like) there is an additional hardware requirement. In particular, further arithmetic operations are needed to carry out the rounding. Typically, as a minimum a further addition operation (or a hardware adder) is needed.

In the present disclosure a modified truncation operation is presented. This is termed herein as a double sign inversion truncation (DIT) operation. Mathematically, this may be understood in terms of the sign inverted truncation of a sign inverted variable. Given a variable $x$ and the truncation operation $T()$ the DIT operation, $T'()$ may be represented as: $T'(x) = -T(-x)$.

It will be appreciated that as the truncation operation $T()$ produces a negative mean error as set out above, the sign inversion of the truncated sign-inverted variable produces a positive mean error. For example, taking the decimal number $2.5_{10}$ which has a two's complement fixed point binary representation of $010.1_2$ the truncation operation $T()$ to a 3 bit wide output gives: $T(2.5_{10}) = T(010.1_2) = 010_2 = 2_{10}$. This has an error of $-0.5_{10}$ Conversely the DIT operation gives: $T'(2.5_{10}) = -T(101.1_2) = -101_2 = 011_2 = 3_{10}$. This has an error of $+0.5_{10}$.

In other words, by inverting the sign of $x$ before the truncation, we achieve an error with a negative average value as expected from truncation, and by finally inverting back the sign, the average error becomes positive.

The operation 130 logically illustrated in figure 1a is an implementation of the double sign inversion truncation operation. The operation 130 comprises a first (or initial) sign inversion operation 131, a truncation operation 110, and a second (or final) sign inversion operation 132.

Each sign inversion operation 131; 132 takes as input an input variable in a two's complement binary representation and inverts the sign of the input variable to produce an output variable of the opposite sign. It will be appreciated that the sign inversion operation is mathematically equivalent to a multiplication by $-1_{10}$.

The first sign inversion operation 131 takes as input the input variable $x(n)$ of the operation 130. The first sign inversion operation 131 provides as output a sign inverted version of the input variable $x(n)$ to the truncation operation 110. The description of the truncation operation 110 above applies equally here.

The output of the truncation operation 110 is provided as input to the second sign inversion operation 132. The second sign inversion operation 132 provides as output a sign inverted version of the output of the truncation operation 110. The sign inverted version of the output of the truncation operation 110 forms (or is) a quantized binary output variable $x_Q(n)$ for (or corresponding to) the input variable $x(n)$ of the operation 130.

For example, if the input variable $x(n)$ is 6 bits long and assigned the decimal value $13_{10}$ then the input variable $x(n)$ will have the two's-complement binary representation of $001101_2$. In this example the fixed binary width is 4 bits. The truncation operation 110 produces a quantized output variable 4 bits wide. In particular, the first sign inversion operation produces the value $110011_2$ or $-13_{10}$. The truncation operation 110 produces the output $1100\underline{00}_2$ or $-16_{10}$. Finally, the second sign inversion operation 131 produces the quantized binary output variable $x_Q(n)$ $0100\underline{00}_2$ or $16_2$. Having an error of $+3_{10}$. As can be seen this is the opposite sign of error, to that which would be obtained by applying the truncation operation 110 without any sign inversion operations. Similarly, in another example the input variable $x(n)$ may be assigned the decimal value $-13_{10}$ then the input variable $x(n)$ will have the two's-complement binary representation of $110011_2$. In particular, the first sign inversion operation produces the value $001101_2$ or $13_{10}$. The truncation operation 110 produces the

output 0011$\underline{00}_2$ or 12$_{10}$. Finally, the second sign inversion operation 131 produces the quantized binary output variable $x_Q$(n) 110$\underline{00}_2$ or -12$_2$. Having an error of $^+1_{10}$. As can be seen this is the opposite sign of error, to that which would be obtained by applying the truncation operation 110 without any sign inversion operations. It will be appreciated that when applying a DIT operation to two's-complement binary representations the error introduced will always be greater than or equal to 0. As such, when multiple such functions are carried out in a sequence of arithmetical operations the average error is greater than or equal to zero, and likely greater than zero. Thus, the truncation errors in a sequence of arithmetic operations are likely to have a large contribution to the overall mean squared error (MSE) on the overall sequence of arithmetic operations.

Furthermore, it will be understood that when implementing such a DIT in hardware (either by a general-purpose processor, or as an operation on an application specific chip, of field-programmable gate array or the like) there is at most two further addition operations (or hardware adders) are needed. However, as described below one or both of the sign inversion operations 131; 132 may be carried out as part of other existing arithmetic operations present in a given sequence of arithmetic operations. In such cases the additional further addition operations (or hardware adders) required may be reduced to one or zero.

Figure 1b logically illustrates the application of a DIT operation to an example arithmetic operation. In particular there is shown a constant multiplication operation 151. In the first sequence 150 there is shown a constant multiplication operation 151 applied to an input variable $x(n)$. The input variable is then quantized to the fixed binary width using a truncation operation 110. As described above the error introduced by the truncation of the output is always less than or equal to zero. The first sequence 150 therefore carries out the arithmetic operation of $x(n)B$ for some constant $B$ subject to a quantization error on the output.

The second sequence 160 is a modified version of the first sequence 150 using a double sign inversion truncation operation 130. As can be seen the constant multiplication operation 151 has been modified to carry out the first sign inversion operation 131 of the DIT operation with no additional hardware overhead. In particular, the sign of the pre-defined constant $B$ has been inverted which leads to the required sign inversion of the input without requiring a further operation. The second sign inversion operation 132 is retained. The second sign inversion operation 132 may be thought of as compensating for the sign inversion of the pre-defined constant $B$ such that the sequence 160 implements the arithmetic operation of $x(n)B$ for some constant $B$ subject to a quantization error on the output. As described above the error introduced by the quantization in this case is of the output is always greater than or equal to zero. However, in this case the DIT operation only requires one further operations (or hardware adder-subtractor) compared with non-sign inverted truncation sequence 150. For example, the sign inversion may use a subtractor, subtracting the value to be sign inverted form zero.

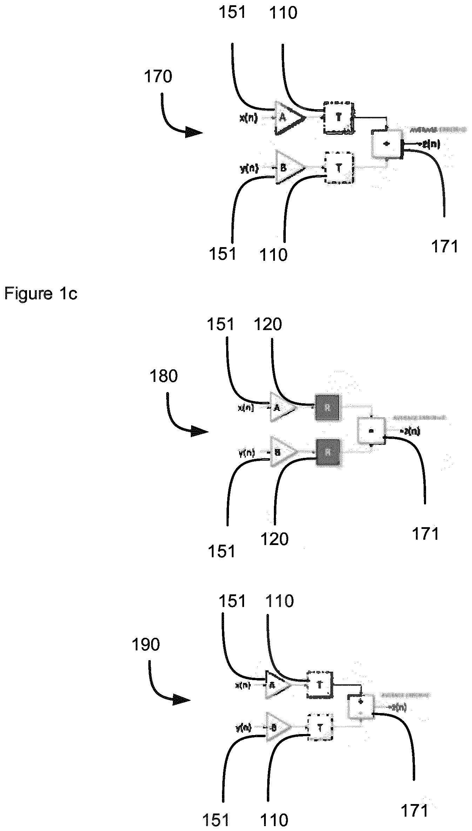

Figure 1c logically illustrates the application of a DIT operation to an example sequence of arithmetic operations. In particular, there are shown three sequences 170; 180; 190 of arithmetic operations that each implement (or carry out) the calculation:

$$Ax(n) + By(n) = z(n)$$

for two input variables $x(n)$ and $y(n)$, and two pre-defined constants $A$ and $B$ subject to a quantization error on the output $z(n)$.

The first sequence 170 comprises two constant multiplication operation 151. One constant multiplication operation 151 multiplies the input $x(n)$ by the pre-defined constant $A$ and the other constant multiplication operation 151 multiplies the input $y(n)$ by the pre-defined constant $B$. The outputs of each constant multiplication operation 151 are truncated using respective truncation operations 110 and then combined by an addition operation 171. As described above each truncation operation 110 introduces a quantization error that is less than or equal to zero. Therefore, the overall error due to quantization on the output $z(n)$ is less than or equal to zero. Moreover, the quantization errors introduced by the respective truncation operations 110 are always additive. As such over multiple executions of the sequence 170 the average error the output $z(n)$ will be increased by the two truncation operations 110.

By contrast the second sequence 180 comprises rounding operations 120 in place of the truncation operations 110. As described above the quantization error introduced by the rounding operations 120 may be positive or negative or zero. As such, over multiple executions of the sequence 180 the average error the output $z(n)$ from the rounding operations 120 should tend to zero. However, the hardware or operation overhead of the second sequence 180 is greater than that of the first sequence 170 due to the additional arithmetic operations required to carry out the rounding operations 120.

The third sequence comprises a truncation operation 110 and a DIT operation 130. In particular, the output of the multiplication of $x(n)$ by the constant $A$ is truncated in the same way as the first sequence 170. However, the multiplication of the input $y(n)$ by the predefined constant $B$ is truncated using a DIT operation 130. In this example the multiplication operation 151 relating to the constant $B$ has been modified to incorporate first sign inversion operation 131 of the DIT operation 130. This has been done as described above in relation to figure 1b, by inverting the sign of the constant $B$. Furthermore, the addition operation 171 has been modified to incorporate the second sign inversion operation 132 of the DIT operation 130. This has been done by changing the addition operation 171 to a subtraction operation 171. In this way the calculation caried out by the sequence 190 has been preserved. However, the quantization error introduced by truncation of the output of the multiplication of $y(n)$ by the constant $B$ is now ensured to be greater than or equal to zero. The quantization errors in the third sequence 190 tend to cancel each other out. As such, over multiple executions of the sequence 190 the average error in the output $z(n)$ from the quantization should tend to zero.

Moreover, as the first and second sign inversions 131; 132 are incorporated into existing operations in the sequence 190 there is no additional hardware or operation overhead compared to the first sequence. It will be appreciated that the above-described calculation, $Ax(n) + By(n) = z(n)$, forms part of many linear time invariant routines (including but not limited to digital filters, Fast Fourier Transform; Discreet Cosine Transforms, Neural Network inference etc.), and thus the above described optimization using DTI operations may be applied to hardware or software implementation of such routines , thereby improving accuracy and reducing hardware or processing overheads.

More generally, it has been inventively realized in the present disclosure that arbitrary calculations comprising sequences of arithmetic operations subject to quantization when implemented on digital processing machines may be optimized by paring sub-sets of arithmetic instructions having comparable truncation errors and applying the above-described DIT operations to one of the sub-sets and applying standard truncation to the other sub-set of each pair. Such optimization provides an error performance similar to or exceeding rounding operations but with lower hardware overhead.

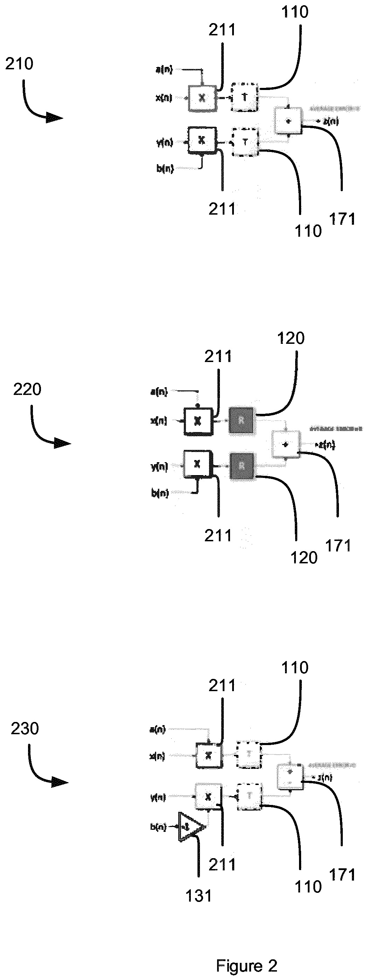

Figure 2 logically illustrates the application of a DIT operation to a further example sequence of arithmetic operations. In particular, there are shown three sequences 210; 220; 230 of arithmetic operations that each implement (or carry out) the calculation:

$$x(n) \cdot a(n) + y(n) \cdot b(n) = z(n)$$

for four input variables $x(n)$, $y(n)$, $a(n)$, $b(n)$ subject to a quantization error on the output $z(n)$.

The first sequence 210 comprises two multiplication operations 211. One multiplication operation 211 multiplies the input $x(n)$ by the input $a(n)$ and the other multiplication operation 211 multiplies the input $y(n)$ by the input $b(n)$ . The outputs of each multiplication operation 211 are truncated using respective truncation operations 110 and then combined by an addition operation 171. As described above each truncation operation 110 introduces a quantization error that is less than or equal to zero. Therefore, the overall error due to quantization on the output $z(n)$ is less than or equal to zero. Moreover, the quantization errors introduced by the respective truncation operations 110 are always additive. As such over multiple executions of the sequence 210 the average error the output $z(n)$ will be increased by the two truncation operations 110.

By contrast the second sequence 220 comprises rounding operations 120 in place of the truncation operations 110. As described above the quantization error introduced by the rounding operations 120 may be positive or negative or zero. As such, over multiple executions of the sequence 220 the average error the output $z(n)$ from the rounding operations 120 should tend to zero. However, the hardware or operation overhead of the second sequence 220 is greater than that of the first sequence 210 due to the additional arithmetic operations required to carry out the rounding operations 120.

The third sequence comprises a truncation operation 110 and a DIT operation 130. In particular, the output of the multiplication of $x(n)$ by the input $a(n)$ is truncated in the same way as the first sequence 210. However, the multiplication of the input $y(n)$ by the input $b(n)$ is truncated using a DIT operation 130. Unlike in the sequence 190 above the multiplication operation 211 is not a constant multiplication operation so it cannot incorporate the first sign inversion operation 131 without additional overhead. As such the sequence 230 is modified to incorporate a separate first sign inversion operation 131 that inverts the sign of the input $b(n)$ before the multiplication operation 211. The addition operation 171 has been modified to incorporate the second sign inversion operation 132 of the DIT operation 130 as described above in relation to figure 1c. This has been done by changing the addition operation 171 to a subtraction operation 171. In this way the calculation caried out by the sequence 230 has been preserved. As before the quantization errors in the third sequence 230 tend to cancel each other out. As such, over multiple executions of the sequence 230 the average error in the output $z(n)$ from the quantization should tend to zero.

Moreover, as the second sign inversion 132 is incorporated into existing operations in the sequence 230 there is only one additional addition operation (or hardware adder) required by the third sequence 230 compared to the first sequence 210. The second sequence 220 which uses rounding operations by contrast requires at least two further addition operations (or hardware adders) compared to the first sequence 210. It will be appreciated that the above-described calculation, $x(n) \cdot a(n) + y(n) \cdot b(n) = z(n)$, forms part of matrix and vector multiplication routines and thus the above described optimization using DTI operations may be applied to hardware or software implementation of such routines, thereby improving accuracy and reducing hardware or processing overheads.

In the examples above, for ease of understanding, DIT operations have been described in relation to calculations where the results of two arithmetic operations are combined to provide an output. It will, however, be appreciated that the above-described optimization using DIT operations may be carried out on larger, more complex calculations. In particular, an arbitrary calculation (or routine) which may be partitioned into two sub-sets of instructions (or arithmetic operations) the outputs of which are combined to provide a result may be optimized using DIT operations. Where the partitioning may be arranged such that the output of the first sub-set of instructions has a comparable truncation error to the output of the second set of instructions may be optimized by applying standard truncation operations to the first sub-set of instructions and DIT operations to the second sub-set of instructions. Such optimization typically involves by modifying second sub-set of instructions to invert the sign input to said sub-set, and modifying the calculation (or routine) sequence to compensate for the said inversion. Such compensation typically comprises inversion of the sign of the output of the second sub-set. As set out above this may be carried out by modifying an operation which combines the output of the first and second subsets. In this way a cancellation of truncation errors between first and second sub-sets is achieved. Here the first and second sub-set of instructions may be thought of as forming a pair of sub-sets. More generally the optimization may comprise partitioning the calculation (or routine) into more than one such pair of subsets of instructions, the sub-sets of each pair having a respective comparable truncation error. Each pair may then be modified in the same way as the pair formed by the first and second sub-sets described above.

It will be appreciated that the calculation (or routine) may comprise sequences of instructions (or arithmetic operations) preceding and/or following one or more of the pairs which may remain unaltered.

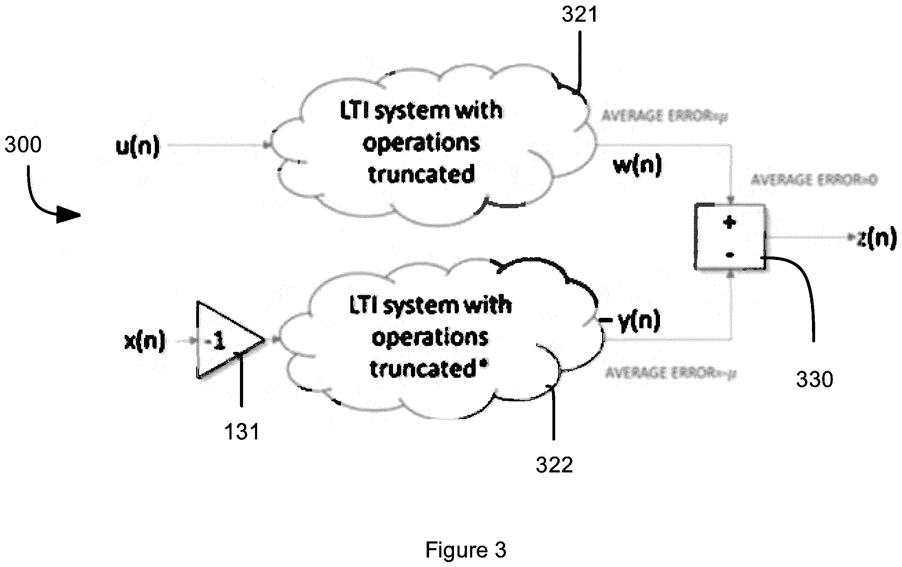

Figure 3 schematically illustrates an example of a calculation 300 (or routine) comprising a plurality of arithmetic operations. In particular the calculation may be partitioned into two linear time invariant systems of calculations 321; 322. Each linear time invariant system of calculations 321; 322 comprises a plurality of arithmetic operations subject to quantization errors. The calculation 300 implements (or carries out):

$$F_{LTI}\big(u(n)\big) + G_{LTI}\big(x(n)\big) \;\; = z(n)$$

where $u(n)$ and $x(n)$ are inputs, $F_{LTI}()$ and $G_{LTI}()$ are the first and second linear time invariant system of calculations respectively. $w(n)$ and $y(n)$ represent the outputs of the first 321 and second 322 linear time invariant system of calculations respectively. In other words, $F_{LTI}(u(n)) = w(n)$ and $G_{LTI}(x(n)) = y(n)$.

As shown in figure 3 the calculation 300 combines the output $w(n)$ of the first linear time invariant system of calculations 321 with the output $y(n)$ of the second linear time invariant system of calculations 322.

Figure 3 shows that the DIT optimization has already been applied. Hence the calculation 300 comprises a first inversion operation 131 applied to the input $x(n)$ to the second linear time invariant system of calculations 322. Similarly, the addition operation 330 has been modified to subtract the now sign inverted output $-y(n)$ of the second linear time invariant system of calculations 322.

It will be understood that all of the arithmetic operations in the first and second linear time invariant system of calculations 321; 322 are subject to truncation operations. For the second linear time invariant system of calculations 322 the first inversion operation 131 and the modification to the compensating modification addition operation 330 form the first and second inversion operations respectively for each truncation. Thus the truncations in the second linear time invariant system of calculations 322 are DTI operations. As such, the average error for $w(n)$ and $y(n)$ will have the same absolute value but different sign. The average error due to truncation for the overall output $z(n)$ will therefore tend to zero. It will be appreciated that this is an improvement over the average error on $z(n)$ for the unmodified calculation 300 if just truncation was used where the error would tend to increase in magnitude.

In light of this it will be understood that given an algorithm (or routine or calculation) that can be divided into two parts (or sub-sets of instructions) each with equivalent truncation errors optimization using DTI operation may be carried out to ensure zero mean truncation error. This may be done whether the two parts have different or alike operations, and whether the two parts have different or the same inputs. By extension it would be understood that a given an algorithm (or routine or calculation) that can be divided into N parts (or sub-sets of instructions) each with equivalent truncation errors optimization using DTI operation may be carried out to ensure zero mean truncation error.

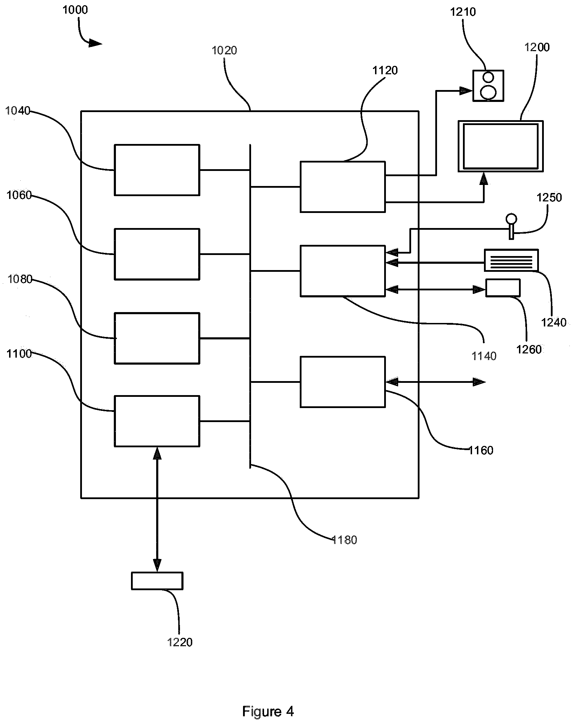

Figure 4 schematically illustrates an example of a computer system 1000. The system 1000 comprises a computer 1020. The computer 1020 comprises: a storage medium 1040, a memory 1060, a processor 1080, an interface 1100, a user output interface 1120, a user input interface 1140 and a network interface 1160, which are all linked together over one or more communication buses 1180.

The storage medium 1040 may be any form of non-volatile data storage device such as one or more of a hard disk drive, a magnetic disc, an optical disc, a ROM, etc. The storage medium 1040 may store an operating system for the processor 1080 to execute in order for the computer 1020 to function. The storage medium 1040 may also store one or more computer programs (or software or instructions or code).

The memory 1060 may be any random access memory (storage unit or volatile storage medium) suitable for storing data and/or computer programs (or software or instructions or code).

The processor 1080 may be any data processing unit suitable for executing one or more computer programs (such as those stored on the storage medium 1040 and/or in the memory 1060), some of which may be computer programs according to embodiments of the invention or computer programs that, when executed by the processor 1080, cause the processor 1080 to carry out a method according to an embodiment of the invention and configure the system 1000 to be a system according to an embodiment of the invention. The processor 1080 may comprise a single data processing unit or multiple data processing units operating in parallel or in cooperation with each other. The processor 1080, in carrying out data processing operations for embodiments of the invention, may store data to and/or read data from the storage medium 1040 and/or the memory 1060.

The interface 1100 may be any unit for providing an interface to a device 1220 external to, or removable from, the computer 1020. The device 1220 may be a data storage device, for example, one or more of an optical disc, a magnetic disc, a solid-state-storage device, etc. The device 1220 may have processing capabilities - for example, the device may be a smart card. The interface 1100 may therefore access data from, or provide data to, or interface with, the device 1220 in accordance with one or more commands that it receives from the processor 1080.

The user input interface 1140 is arranged to receive input from a user, or operator, of the system 1000. The user may provide this input via one or more input devices of the system 1000, such as a mouse (or other pointing device) 1260 and/or a keyboard 1240, that are connected to, or in communication with, the user input interface 1140. However, it will be appreciated that the user may provide input to the computer 1020 via one or more additional or alternative input devices (such as a touch screen). The computer 1020 may store the input received from the input devices via the user input interface 1140 in the memory 1060 for the processor 1080 to subsequently access and process, or may pass it straight to the processor 1080, so that the processor 1080 can respond to the user input accordingly.

The user output interface 1120 is arranged to provide a graphical/visual and/or audio output to a user, or operator, of the system 1000. As such, the processor 1080 may be arranged to instruct the user output interface 1120 to form an image/video signal representing a desired graphical output, and to provide this signal to a monitor (or screen or display unit) 1200 of the system 1000 that is connected to the user output interface 1120. Additionally or alternatively, the processor 1080 may be arranged to instruct the user output interface 1120 to form an audio signal representing a desired audio output, and to provide this signal to one or more speakers 1210 of the system 1000 that is connected to the user output interface 1120.

Finally, the network interface 1160 provides functionality for the computer 1020 to download data from and/or upload data to one or more data communication networks.

It will be appreciated that the architecture of the system 1000 illustrated in figure 4 and described above is merely exemplary and that other computer systems 1000 with different architectures (for example with fewer components than shown in figure 4 or with additional and/or alternative components than shown in figure 1) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc.

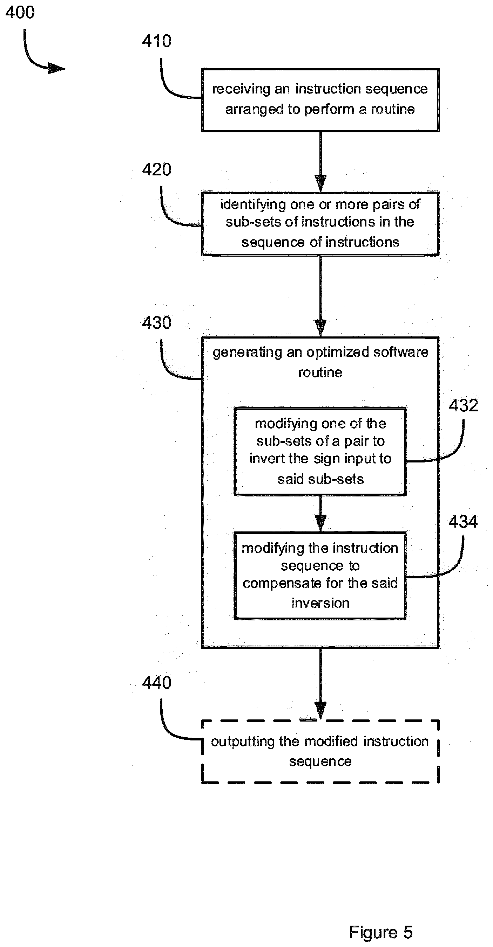

Figure 5 schematically illustrates a method 400 optimizing a routine for a hardware-based processing system having a fixed length two's complement binary representation. As will be understood from the preceding discussion existing routines may be automatically optimized by including DIT operations appropriate to the fixed length requirements of a target hardware processing system. The target hardware processing system may be a general-purpose processing system such as the system 1000 described in figure 4. In such cases fixed length requirements are typically determined by the architecture of the processor 1080. The fixed length may be dependent on a variable type of the arithmetic operation. Typically the fixed-length is a power of two multiple of the word length of the architecture of the processor 1080. Equally, it will be appreciated that the target hardware processing system may be an embedded system (or system-on-chip) or component thereof. For example, the target hardware processing system may be (or comprise) an application-specific integrated circuit (ASIC). In another example the target hardware processing system may be (or comprise) a field-programmable gate array (FPGA). In such cases the bit length may be imposed on an operator by operator basis.

As such, it will be appreciated that the routine may be a software routine, for execution by a processor. Equally, the routine may be a description of a hardware routine for the production of an ASIC or FPGA or other embedded system.

The routine specifies (or describes or otherwise embodies) an algorithm to be carried out by a computing system, such that performing (or executing) the routine results in the performance (or execution) of the algorithm.

It will be appreciated that the method 400 is typically carried out by a computing system such as the system 1000 described in figure 4. However, the computing system that carried out the method 400 is not required to be the same type (or class) of computing system as the target hardware processing system.

At a step 410 an instruction sequence is arranged to perform the routine is received. As set out above the target hardware processing system for the routine may in some cases be a general-purpose computer and may in other cases be an embedded system. As such, the instruction sequence may be represented (or received) as any of: a high level software language (such as C, C++, C#, and so on), a low-level programming language (such as assembly language, machine code), a hardware description language (such as VHDL, Verilog and so on). It will also be understood that the method 400 may be carried out as part of the compilation of a software code in a high-level language. As such, the instruction sequence may be represented (or received) as a compiler intermediate representation or in an intermediate language.

Typically, the instruction sequence comprises (or specifies or otherwise represents) as sequence of arithmetic operations. The outputs of at least some of the arithmetic operations exceed a precision of the target hardware-based processing system. The instruction sequence may already specify (or include) quantization operations (such as truncation operations or rounding operations) to be performed on the output of the arithmetic operations. Alternatively, in some cases the instruction sequence may not specify how the output of the arithmetic operations is to be quantized.

In a step 420 one or more pairs of sub-sets of instructions in the sequence of instructions is identified. Said identification is carried out such that the sub-sets of each pair have a respective comparable truncation error. It will be understood that each sub-set of instructions may comprise more than one arithmetic operation. Indeed, a sub-set may itself be or comprise a complex routine. A sub-set may have more than one input variable, and may have more than one output. Equally a sub-set may comprise more than one sequence of instructions and as such may comprise one or more instructions branches. Two sub-sets of a given pair are identified if outputs of each sub-set are later combined in the sequence of instructions. The step 420 may be carried out by static analysis of the sequence of instructions. For example, as described above, a number of pre-defined calculations (or primitive calculations) having pre-defined partitions (or pairs of sub sets) may be identified. Examples described above include calculations of the forms: $Ax(n) + By(n) = z(n)$, $x(n) \cdot a(n) + y(n) \cdot b(n) = z(n)$, $F_{LTI}(u(n)) + G_{LTI}(x(n)) = z(n)$, and so on. Equally, as described shortly below for some known calculations structures analytical methods may be used to determine pairs (or partitions) of sub-sets of instructions. It will also be understood that dynamic analysis may be used to identify sub-sets of instructions which produce comparable truncation errors. This may be carried out by running simulations of candidate sub-sets of instructions on suitable ranges of inputs. As such, the step of identifying 420 may comprise calculating a respective average error in the output of the software routine due to the truncation of each arithmetic operation in the set of arithmetic operations, and identifying pairs of sub-sets to minimize the sum of the respective average errors.

In a step 430 an optimized routine (or version of the routine) is generated. The optimized routine is generated by arranging the routine to apply DIT operations to the sub-sets of instructions of each pair, and to apply truncation (or standard truncation) to the other sub-set of each pair. In this way the optimized routine is arranged to cause a cancellation of truncation errors between each pair of sub-sets. Typically, for each pair the step 430 comprises modifying 432 one of the sub-sets of each pair to invert the sign of one or more inputs to said sub-sets. As described above, the step of modifying 432 may comprise including (or introducing) one or more sign inversion operations into the sub-set of instructions. Additionally, or alternatively the step of modifying 432 may comprise inverting the sign of one or more multiplicative constants specified (or present) in the sub set of instructions.

The step 430 comprises modifying 434 the instruction sequence to compensate for the said inversion. The step of modifying 434 typically comprises including a compensation operation in the instruction sequence. The compensation operation is arranged to compensate (or adjust or otherwise alter) the instruction sequence based on said inversion such that the operation of the routine is preserved. In other words, the compensation operation compensate for the inversion preserving the routines functionality in carrying out the algorithm. As described above, the compensation operation may be or comprise a sign inversion operation applied to one or more outputs of the sub-set of instructions. Additionally, or alternatively the step of modifying 434 may comprise changing an operation in the sequence of instructions that combines outputs of the pair of sub-sets to cause a change of sign. For example, an addition operation may be changed to a subtraction operation or vice versa.

As discussed above, in some cases the instruction sequence may already specify (or include) quantization operations. As such, the step 430 may comprise replacing one or more rounding operations in the pair of sub-sets with truncation operations. Alternatively, the instruction sequence may not specify how the output of the arithmetic operations is to be quantized. As such, the step 430 may comprise inserting truncation operations in the pair of sub-sets.

The step 430 results in an optimized routine represented by a modified sequence of instructions.

It will be appreciated that the optimized routine may be used further, as indicated by the optional step 440. The step 440 may comprise outputting the modified instruction sequence for further use (further processing). For example, where the instruction sequence specifies a hardware routine the step 440 may comprise providing the modified instruction sequence for manufacturing one or more embedded systems (such as ASICs, or FPGAs). The step 440 may comprise compiling the modified instruction sequence into a netlist.

Similarly, where the where the instruction sequence specifies a software routine the step 440 may comprise compiling the modified instruction sequence to generate executable code for the routine.

Whilst as described above the optimization using DIT operations may be carried out on arbitrary routines (or calculations) automatically, there are specific types of widely used calculations that it may be beneficial to implement in hardware (or software) using DIT operations, optimized for the particular bit length requirements of particular digital processing systems. Some examples of such routines are provided below. It will be appreciated that these routines as described may also be recognized and optimized by the method 400 described above

**General matrix multiplication and dot product(s)**

Matrix multiplication is a fundamental operation in many fields, including but not limed to channel equalization, neural networks, LTI algorithms, etc. The output of a multiplication will typically require quantization since the number of bits of the result is always bigger than that of the operands. An 8-bit by 8-bit multiplication generates a 16-bit result. Multiplications are one of the main operations in matrix multiplications and dot products. Furthermore, the multiplications in matrix multiplications and dot products operate in conjunction with additions. Each matrix or vector element may be thought of as the result of adding the results of multiplications.

A dot product of two N-dimension column vectors $\vec{a} = \begin{pmatrix} a_1 \\ \vdots \\ a_N \end{pmatrix}$ and $\begin{pmatrix} b_1 \\ \vdots \\ b_N \end{pmatrix}$ may be represented as:

$$\vec{a}^T \cdot \vec{b} = \sum_{i=1}^{N} a_i \cdot b_i$$

where $\vec{a}^T$ is the transpose of $\vec{a}$.

One approach to quantization would be the use of rounding as follows:

$$\vec{a}^T \cdot \vec{b} \approx \sum_{i=1}^{N} R(a_i \cdot b_i)$$

This requires N multiplications, N rounding operations (equivalent computational cost to additions) and N-1 2-input additions.

Instead, DIT operations may be used, truncating $T(\quad)$ half of the multiplications and applying DIT operations to the rest:

$$\vec{a}^T \cdot \vec{b} \approx \sum_{i=1}^{\frac{N}{2}-1} T(a_i \cdot b_i) - \sum_{j=\frac{N}{2}}^{N} T((-a_i) \cdot b_i)$$

This requires N multiplications, N/2 sign inversions (where the individual computational cost is similar to rounding), N-2 2-input additions, and one 2-input subtraction.

The only extra cost is the N/2 sign inversions for which the computational cost is less than N rounding operations. Note that N-2 additions plus a single subtraction is in terms of computational cost equivalent to N-1 additions.

**Table 1.- Operations required for non-constant dot product with rounding and DIT.**

| Type | Vector size | No. of Multiplications | No. 2-input additions/subtractions |
|------|-------------|------------------------|------------------------------------|
| Rounding | N | N | 2N-1 (N rounding + N-1 add) |
| DIT | N | N | N/2+N-1 (N inversion + N-1 add/sub) |
| Rounding | 100 | 100 | 199 |
| DIT | 100 | 100 | 149 |

When embodied in a hardware implementation (such as an FPGA or ASIC) the overall hardware cost will be reduced when using DIT in comparison with applying rounding. In a software implementation the overall computational cost of performing the routine will be reduced using DIT in comparison with applying rounding. A similar reasoning can be applied to matrix multiplications.

With reference to the method 400 described above the routine may comprise an N-dimensional scalar product of two vectors and the sequence of instructions comprises summing N vector coefficient multiplications. In such an example, the step of identifying 420 may identify a pair of sub-sets of instructions such that the first sub-set of instructions comprises half of the N multiplications in the sum $\sum_{i=1}^{N} a_i \cdot b_i$, and the second sub-set comprises the other half of the N multiplications. As such, the modification step 432 may comprise including N/2 sign inversion operations to invert the elements of the sum in the first sub-set. The modification step 434 may comprise including a compensation operation in the sequence arranged to take the difference between sums of the first and the second sub-sets.

### Constant matrix multiplication and dot product(s)

Similarly, in many fields when performing matrix or vector multiplication one of the operands in a matrix or vector operation has constant values for a long time. There are three possible scenarios.

a) The elements of the constant operand are read once from memory each time the overall program is run (or executed) and never change during the run. Here the required sign inversions can be precomputed and no additional computational or hardware overhead in incurred by using DIT.

b) The elements of the constant operator are precomputed, stored in a memory, used in the operation for a very long time and then recomputed. Instead of inverting the values during the matrix/vector multiplication, it is possible to invert the values before storing the values in memory, thus, no additional computational or hardware overhead is incurred during the execution of the multiplication.

c) The elements of the constant operand never change and there are resources dedicated for each operation using them. This is typically the case in a massively parallel system, where there is a dedicated multiplier per operand element. In this case the multiplier is optimized to always perform the multiplication by a constant and the constant can be sign inverted (as described previously in relation to figure 1c) so no additional computational or hardware overhead in incurred by using DIT.

### Linear time invariant algorithms

Analytical expressions may be found for the propagation to the output of the quantization errors committed at any point in an LTI algorithm. See for example D. Menard and O. Sentieys, "Automatic evaluation of the accuracy of fixed-point algorithms," Proceedings 2002 Design, Automation and Test in Europe Conference and Exhibition, Paris, France, 2002, pp. 529-535, doi: 10.1109/DATE.2002.998351. As these analytical expressions are well-known we will not describe them further herein. However, these may be used to partition LTI systems where the propagation of errors is not symmetrical. In this case, assuming that no rounding is applied at all, we can apply an optimization method to find out which quantization must be truncated via DIT to minimize the average error of the output.

An example method is:

1. Compute the average error $\mu_i$ at each truncation $i$.
2. Compute the mean factor $m_i$ that models the propagation of error i to the output. The average error at the output due to a truncation $i$ is $\mu_{i,out} = \mu_i \cdot m_i$.

- Signal processing theory states that $m_i = \Sigma_n g_i(n)$ where $g_i(n)$ is the impulse response from the truncation point to the output.

3. Given the column vector $\vec{\mu}_{out} = (\mu_{0,out}, \dots , \mu_{N-1,out})$ compute a N-dimension column vector $\vec{w} \backslash w_i \in \{1, -1\}$ that minimizes $\mu_{out} = \vec{\mu}_{out}^T \cdot \vec{w} = \sum_i \mu_{i,out} \cdot w_i$

Such a method may be used as part of the identifying step 420 described above for routines comprising LTI algorithms.

The step 3 may feasibly be performed using a brute force search. In particular by generating all the combinations of $\vec{w}$ and selecting the one that produces the smallest error. An additional penalty function (or cost) may also be used. For example , the vector $\vec{w}$ may be chosen that produces the smallest error while minimizing code length (for software routines) or number of gates (for routines to be made into hardware implementations).

Step 3 may alternatively be performed by solving the well-known partition problem which, given a set of numbers (i.e. $\mu_{i,out} \cdot w_i$), it finds two partitions so that the summation the element of each one is as close as possible. One partition can be assigned to the traditional truncations (i.e. $w_i = 1$) and the other to DIT (i.e. $w_i = -1$).

It will be understood that there are several well-known heuristic approaches to solving the partition problem. These include, greedy number partitioning, largest differencing algorithm, etc. Greedy number partitioning is set out in Korf, Richard E. (August 1995). "From approximate to optimal solutions: A case study of number partitioning" and Mellish, Chris S. (ed.). IJCAI'95: Proceedings of the 14th international joint conference on Artificial intelligence. pp. 266-272. ISBN 978-1-55860-363-9. The largest differencing algorithm approach is set out in N. Karmarkar, R.M. Karp, The differencing method of set partitioning, Technical Report UCB/CSD 82/I 13. Computer Science Division, University of California. Berkeley, CA, 1982. As such these are not discussed further herein.

An example of an LTI algorithm or calculation is a $4^{th}$-order linear-phase FIR filter defined as:

$y[n] = x[n] \cdot b_0 + x[n-1] \cdot b_1 + x[n-2] \cdot b_2 + x[n-3] \cdot b_3 + x[n-4] \cdot b_4 = x[n] \cdot \alpha + x[n-1] \cdot \beta + x[n-2] \cdot \gamma + x[n-3] \cdot \beta + x[n-4] \cdot \alpha = (x[n]+x[n-4]) \cdot \alpha + (x[n-1] + x[n-3]) \cdot \beta + x[n-2] \cdot \gamma$

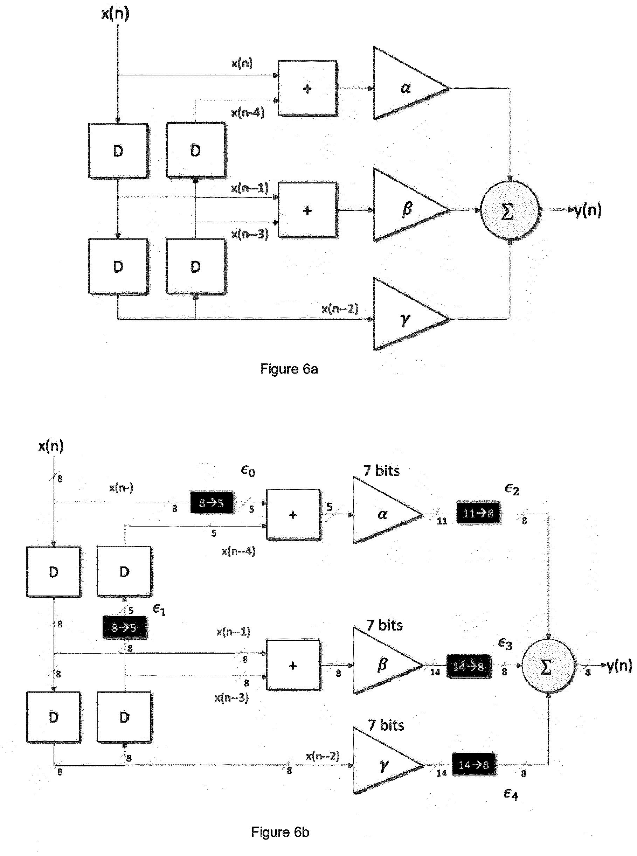

Figure 6a schematically illustrates such a $4^{th}$-order FIR filter. The boxes with the addition sign indicate addition operation, the triangles indicate multiplication by the constant indicated in the triangle, the circle indicates summation operation and the boxes marked D indicate a decrement of the input index.

For this example:

- $\alpha = \frac{3}{2^6} = 0.0468750_{10}$ (6-bit two's complement: $0.10001_2$)

- $\beta = \frac{31}{2^6} = 0.2421875_{10}$ (6-bit two's complement: $0.11111_2$)

- $\gamma = \frac{23}{2^6} = 0.17968753_{10}$ (6-bit two's complement: $0.10111_2$)
- The input ($x[n]$) is an 8-bit two's complement variable smaller than 1.
- All multipliers' outputs are truncated to 8 bits
- The input of the multiplication by $\alpha$ is truncated to 4 bits.
- The inputs of the multiplications by $\beta$ and by $\gamma$ are kept with 8 bits
- The outputs of additions are not truncated

Figure 6b schematically illustrates the FIR filter with the required truncation operations, and shows the number of bits of all variables. It will be appreciated that the number of bits chosen in this case is merely for ease of understanding and implementation of such a filter may use different bit widths without loss of generality. Nevertheless, the bit widths are consistent with ASIC design and demonstrates an LTI system with non-equal average errors at the output. In figure 6b to the quantization errors produce by each quantization have been given the labels $\varepsilon_0 \ldots \varepsilon_4$.

The values of the average errors at the outputs are:

$$\mu_{0,out} = \mu_0 \cdot \alpha = (2^{-4} - 2^{-7}) \cdot \frac{3}{2^6} = 0.002563476562500_{10} = \mu_{1,out}$$

$$\mu_{2,out} = \mu_2 = (2^{-7} - 2^{-11}) = 0.0068359375_{10}$$

$$\mu_{3,out} = (2^{-7} - 2^{-13}) = 0.007690429687500_{10} = \mu_{4,out}$$

The average error for the truncation case shown in figure 6b is $0.02734375_{10}$. As discussed above it is feasible to brute force search for a suitable vector $\vec{w}$. In this case there are 32 possible vectors. The vectors that minimize the average error at output are shown below:

Optimal solutions: weight equal to 1 means truncation; -1 means DIT.

| $\vec{w}$ | $\mu\_out$ |
|---|---|
| ( -1, -1, 1, 1, 1) | 0.001708984375 |
| (-1, 1, 1, 1, 1) | 0.001708984375 |
| (1, 1, -1, -1, 1) | -0.001708984375 |
| (1, 1, -1, 1, -1) | -0.001708984375 |

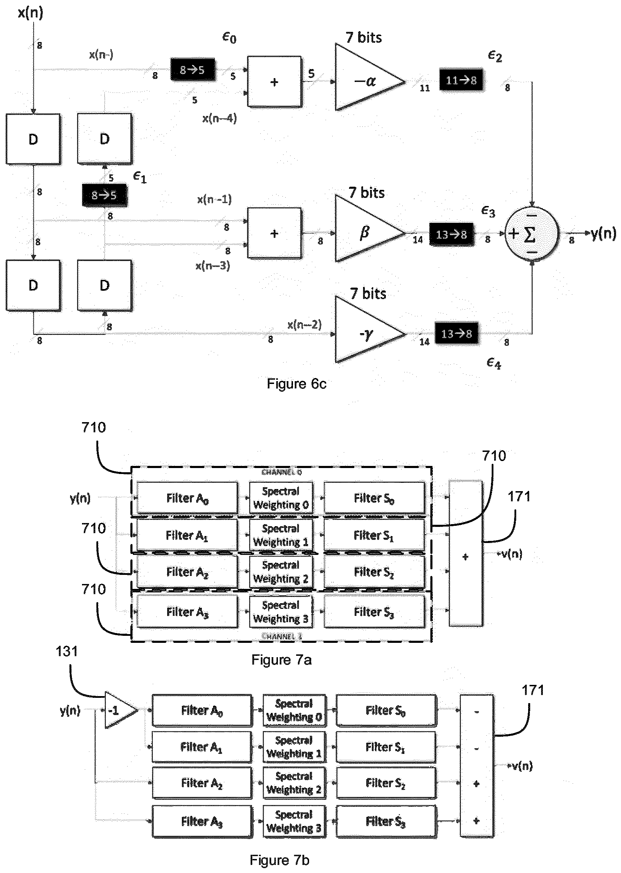

In this case four vectors $\vec{w}$ same minimum absolute value. However, the third and fourth solution require less hardware. Figure 6c schematically illustrates the fourth solution.

## Analysis-synthesis filter bank (AS FB)

The analysis-synthesis filter bank is a system commonly used in speech enhancement in communication applications. Figure 7a shows the basic structure implementation with truncation and Figure 7b shows how DIT operations can be applied to cancel the average error at the output $v(n)$, providing that the quantization applied to each channel is the same. The filters and the spectral weighting blocks are implemented with truncation for both systems shown. Note that the filters are LTI systems, but the spectral weighting blocks are not. However, it can be shown that the spectral weighting blocks do not modify the sign of the errors.

As can be seen the analysis-synthesis filter bank comprises a number of channels 710 having a common input $y(n)$. The outputs of the channels 710 are summed using the combining operation 171 to provide the output $v(n)$. As such, DIT operations can be applied to a sub set of M channels. Standard truncation can be applied to another non-overlapping sub-set of M channels. In this way the above-described cancellation of errors between the first M channels and the second M channels can be achieved, without the use of rounding operations.

Such partitioning may be carried out automatically in the identifying step 420 described above.

In the particular example shown in Figures 7a and 7b it can be seen that a single sign inversion operation is introduced on the input to the first two channels. The combination operation 171 is then modified to subtract the output of the first two channels from the sub of the output of the remining channels. As such, the output $v(n)$ is preserved.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## APPENDIX A

It can be proved that the statistical properties of an error with mean $\mu = 0$ that is the result of adding N independent errors $n_i$ with individual means $\mu_i = 0$ and variances $\sigma_i^2$ are the same as an error with mean $\mu = 0$ that is the result of adding N independent errors $n_i$ with arbitrary values for $\mu_i$ and the same variance $\sigma_i^2$ as in the first case. As such, statistically, the use of DIT operations described above will always produce the same results as rounding.

Given a set of errors $n_i$ that are produced by rounding variables $s_i$, they have a zero-mean probability density function (pdf) $f_{n_i}(n)$. If a $s_i$ is not rounded but truncation is applied instead, creating a noise $n_i^T$, then the resulting pdf is similar but shifted to the left an amount equal to the non-zero mean of $n_i^T\ (\mu_i^T) \rightarrow f_{n_i^T}(n) = f_{n_i}\left(n + \mu_i^T\right)$. If a DTI operation is applied instead the pdf is $f_{n_i^{DIT}}(n) = f_{n_i}\left(n - \mu_i^T\right)$.

Looking first at the effect of shifting the pdf along the random variable, given a pdf $f_X(x)$ with characteristic function (c.f.) $\Phi_X(\omega)$, the characteristic function of $f_X(x + \Delta)$ is $e^{j\Delta\omega}\Phi_X(\omega)$. We could say that the c.f. is the frequency transform of the pdf, so it can be used to study a random variable in the same terms as that. Thus, $\Phi_{n_i^T}(\omega) =$

$$e^{j\mu_i^T\omega}\Phi_{n_i}(\omega)$$

and

$$\Phi_{n_i^{DIT}}(\omega) = e^{-j\mu_i^{DIT}\omega}\Phi_{n_i}(\omega)$$

From this we can see the effect of adding many independent random variables. The characteristic function of the summation of many independent variable $X_i$ is equal to $\Pi\Phi_{X_i}(\omega)$.

Finally, considering the previous points we can prove the following. If an algorithm makes use of rounding, the error at its output will be the summation of all the errors $n_i$ generated by rounding signals/variables $s_i$. So the characteristic function will be equal to $\Phi^R(\omega) = \Pi\Phi_{n_i}(\omega)$.

If an algorithm combines K truncations and M DIT operations, then the output will be composed with truncation errors with means $\mu_k^T$ and DIT errors with means $\mu_m^{DIT}$. The c.f. of the output error is

$$\Phi^{T+DIT}(\omega) = \left(\prod_{k=1}^{K} e^{j\mu_k^T\omega} \cdot \Phi_{n_k}(\omega)\right) \prod_{m=K+1}^{K+M} e^{j\mu_m^{DIT}\omega} \cdot \Phi_{n_m}(\omega)$$

$$= \left(e^{j\omega\sum_{k=1}^{K}\mu_k^T} \prod_{k=1}^{M} \Phi_{n_k}(\omega)\right) e^{j\omega\sum_{m=K+1}^{K+M}\mu_k^{DIT}} \prod_{m=K+1}^{M+K} \Phi_{n_m}(\omega)$$

$$= e^{j\omega\left(\sum_{k=1}^{K}\mu_k^T + \sum_{m=K+1}^{K+M}\mu_k^{DIT}\right)} \prod_{i=1}^{M+K} \Phi_{n_i}(\omega)$$

If the DIT technique is applied in an optimal way, then $\sum_{k=1}^{K}\mu_k^T + \sum_{m=K+1}^{K+M}\mu_k^{DIT} = 0$, so

$$\Phi^{T+DIT}(\omega) = \prod_{i=1}^{M+K} \Phi_{n_i}(\omega) = \Phi^R(\omega)$$

This proves that if the DIT is applied to ensure the overall mean is zero, then the pdf of the resulting error is exactly the same as a rounding noise with perfect zero mean.

**Claims**

1. A method of optimizing a routine for a hardware-based processing system having a fixed length two's complement binary representation, the method comprising:

receiving an instruction sequence arranged to perform the routine, wherein the instruction sequence comprises a set of arithmetic operations, wherein the outputs of the arithmetic operations exceed a precision of the hardware-based processing system; identifying one or more pairs of sub-sets of instructions in the sequence of instructions, the sub-sets of each pair having a respective comparable truncation error;

generating an optimized routine by modifying one of the sub-sets of each pair to invert the sign of one or more inputs to said sub-sets, and modifying the instruction sequence to compensate for the said inversion.

2. The method of claim 1 wherein modifying the instruction sequence comprises modifying the instruction sequence to invert sign of the output of each sub-sequence with an inverted sign input.

3. The method of claim 1 wherein the instruction sequence comprises at least one instruction to sum the outputs of a respective pair of sub-sets and said modification of the instruction sequence comprises replacing each instruction to sum the outputs with an instruction to calculate the difference of the outputs of the respective pair of sub-sets.

4. The method of any preceding claim wherein modifying one of the sub-set of at least one pair to invert the sign of the input to said sub-sequence comprises inverting the sign of a multiplicative constant used in the sub-set.

5. The method of any preceding claim wherein said generating comprises removing rounding operations from at least one pair of sub-set.

6. The method of any preceding claim wherein the routine comprises an N-dimensional scalar product of two vectors and the sequence of instructions comprises summing N vector coefficient multiplications, optionally wherein the software routine implements matrix multiplication.

7. The method of claim 6 wherein each of the sub-sequences comprises a respective vector coefficient multiplication, wherein the modified instruction sequence takes the difference of the sum of the sub-set with the inverted sign input and the sub of the other sub-set.

8. The method of any one of claims 1-5 wherein the routine implements a linear time invariant (LTI) algorithm.

9. The method of claim 8 wherein identifying one or more pairs of sub-sets comprises calculating a respective average error in the output of the routine due to the truncation of each arithmetic operation in the set of arithmetic operations, optionally wherein identifying one or more pairs of sub-sets comprises minimizing the sum of the respective average errors.

10. The method of any one of claims 1-5 wherein the routine implements a filter bank comprising two or more channels, wherein each sub-set of instructions corresponds to a respective channel, optionally wherein the filter bank is an analysis-synthesis filter bank.

11. The method of any preceding claim wherein the routine is a software routine, or a hardware description language routine.

12. A method of calculating an N-dimensional scalar product of two vectors in a hardware-based processing system having a fixed length two's complement binary representation, the method comprising:

calculating the sum of N/2 vector coefficient vector multiplications of the scalar product, wherein said calculating comprises truncating intermediate results which exceed a precision of the hardware-based processing system; calculating the sum of the other N/2 vector coefficient vector multiplications of the scalar product, wherein said calculating comprises inverting the sign of each vector coefficient of one of the two vectors and truncating intermediate results which exceed a precision of the hardware-based processing system; calculating the difference of the sum of N/2 vector coefficient vector multiplications of the scalar product and the sum of the other N/2 vector coefficient vector multiplications of the scalar product to thereby obtain the scalar product.

13. A method of implementing filter bank having a plurality of channels, in a hardware-based processing system having a fixed length two's complement binary representation, the method comprising:

receiving an input signal;

applying the filters of a first sub-set of M channels the plurality of channels to the input signal;
applying the filters of a second sub-set of M channels the plurality of channels to an inverted sign input signal;
generating an output of the filter bank by taking the difference of the outputs of the first sub-set of M channels and the second sub-set of M channels.

14. A system arranged to carry out a method according to any one of claims 1 to 13.

15. An application specific integrated circuit arranged to carry out the method according to claim 12 or 13.

16. A computer-readable medium storing a computer program which, when executed by a processor, causes the processor to carry out a method according to any one of claims 1 to 13.

Figure 1a

Figure 1b

151    110

170

x(n) →◁A▷→ | T |

y(n) →◁B▷→ | T |

→ z(n)

151    110

171

Figure 1c

151    120

180

x(n) →◁A▷→ | R |

y(n) →◁B▷→ | R |

→ z(n)

120

151

171

151    110

190

x(n) →◁A▷→ | T |

y(n) →◁B▷→ | T |

→ z(n)

151    110

171

Figure 2

Figure 3

Figure 4

400

410

receiving an instruction sequence
arranged to perform a routine

420

identifying one or more pairs of
sub-sets of instructions in the
sequence of instructions

430

generating an optimized software
routine

432

modifying one of the
sub-sets of a pair to
invert the sign input to
said sub-sets

434

modifying the instruction
sequence to
compensate for the said
inversion

440

outputting the modified instruction
sequence

Figure 5

Figure 6a

Figure 6b

24

Figure 6c

Figure 7a

Figure 7b

Europäisches
Patentamt
European
Patent Office
Office européen
des brevets

# EUROPEAN SEARCH REPORT

**Application Number**

EP 24 38 2732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Strang Gilbert ET AL: "Course 18.327 and 1.130 Wavelets and Filter Banks", , 1 January 2003 (2003-01-01), XP093235133, Retrieved from the Internet: URL:https://ocw.mit.edu/courses/18-327-wavelets-filter-banks-and-applications-spring-2003/9ae8fd2b4313aea9cb1d828e3d431301_Handout3.pdf [retrieved on 2024-12-17] | 13-16 | INV. G06F7/499 G06F7/544 |
| A | * page 1 * * page 5 * | 1-12 | |
| A | Oppenheim Alan V. ET AL: "Discrete-Time Signal Processing [Part 2/3]", , 1 January 1999 (1999-01-01), XP093235265, ISBN: 978-0-13-754920-7 Retrieved from the Internet: URL:https://elibrary.pearson.de/book/99.150005/9781292038155 [retrieved on 2024-12-17] * Sections 6.6-6.9 * | 1-16 | |

**TECHNICAL FIELDS SEARCHED (IPC)**

G06F

The present search report has been drawn up for all claims

| Place of search | Date of completion of the search | Examiner |
|---|---|---|
| Munich | 18 December 2024 | Winkelbauer, Andreas |

EPO FORM 1503 03.82 (P4C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. MENARD** ; **O. SENTIEYS**. Automatic evaluation of the accuracy of fixed-point algorithms. *Proceedings 2002 Design, Automation and Test in Europe Conference and Exhibition, Paris, France*, 2002, 529-535

- From approximate to optimal solutions: A case study of number partitioning. **KORF** ; **RICHARD E**. IJCAI'95: Proceedings of the 14th international joint conference on Artificial intelligence.. August 1995, 266-272

- **N. KARMARKAR** ; **R.M. KARP**. The differencing method of set partitioning. *Technical Report UCB/CSD 82/I 13. Computer Science Division, University of California. Berkeley, CA*, 1982